Europäisches Patentamt

European Patent Office

Office européen des brevets

(11) Veröffentlichungsnummer: **0 282 776 B1**

## (12) EUROPÄISCHE PATENTSCHRIFT

(45) Veröffentlichungstag der Patentschrift: **11.09.91**

(21) Anmeldenummer: **88102669.4**

(22) Anmeldetag: **24.02.88**

(51) Int. Cl.5: **B23Q 15/02, B24B 33/06**

(54) Honverfahren.

(30) Priorität: **07.03.87 DE 3707326**

(43) Veröffentlichungstag der Anmeldung:
**21.09.88 Patentblatt 88/38**

(45) Bekanntmachung des Hinweises auf die
Patenterteilung:
**11.09.91 Patentblatt 91/37**

(84) Benannte Vertragsstaaten:
**DE ES FR GB IT SE**

(56) Entgegenhaltungen:
**DE-C- 2 559 949**
**US-A- 3 451 175**

(73) Patentinhaber: **Maschinenfabrik Gehring GmbH & Co.**
**Gehringstrasse 28**
**W-7302 Ostfildern 2(DE)**

(72) Erfinder: **Grimm, Hans, Dipl.-Ing. (FH)**
**Farnweg 13**
**W-7300 Esslingen/Neckar(DE)**
Erfinder: **Richter, Günter**
**Achalmstrasse 9**
**W-7312 Kirchheim/Nabern(DE)**

(74) Vertreter: **Jackisch, Walter, Dipl.-Ing. et al**
**Patentanwalt W. Jackisch & Partner Menzelstrasse 40**
**W-7000 Stuttgart 1(DE)**

## Beschreibung

Die Erfindung betrifft ein Honverfahren nach dem Oberbegriff des Anspruches 1.

Bei den bekannten Verfahren dieser Art ist der Meßvorgang dem Honvorgang überlagert. Die Messungen erfolgen während das Honwerkzeug drehend in Achsrichtung hin- und her bewegt wird, wobei die Honsteine gegen die zu bearbeitende Werkstückoberfläche gedrückt werden. D.h. der Meßvorgang ist dynamischen Bedingungen unterworfen und es hat sich gezeigt, daß darunter die Meßgenauigkeit leidet. Ferner ist der Meßfehler gegenüber einer unter statischen Bedingungen, z.B. in einer separaten Meßstation durchgeführten Messung größer. Besonders nachteilig ist, daß die Meßungenauigkeiten progressiv mit zunehmender Bearbeitungskraft und Schnittgeschwindigkeit ansteigen und sich schädlich auf die Bearbeitungsgenauigkeit auswirken. Dies deshalb, weil auf der anderen Seite, um kürzere Bearbeitungszeiten zu erreichen bei modernen Honmaschinen der Trend zu immer höheren Schnittgeschwindigkeiten und Bearbeitungskräften geht. Dabei werden aber gleichzeitig immer höhere Anforderungen an die Bearbeitungsgenauigkeit gestellt.

Aufgabe der Erfindung ist es deshalb, ein Verfahren der eingangs genannten Art zu schaffen, durch das die geschilderten Nachteile vermieden werden und auch bei großen Schnittgeschwindigkeiten und/oder Bearbeitungskräften eine sehr hohe Bearbeitungsgenauigkeit sichergestellt ist.

Diese Aufgabe wird bei einem Verfahren der gattungsbildenden Art erfindungsgemäß mit den kennzeichnenden Merkmalen des Anspruches 1 gelöst.

Durch die Reduzierung der Honbearbeitung die z.B. durch Herabsetzen der Bearbeitungskraft und/oder Schnittgeschwindigkeit erfolgt, wird eine Messung unter quasi statischen Bedingungen ermöglicht, die in ihrer Genauigkeit einer statischen Messung zumindest sehr nahekommt. Die bei dem erfindungsgemäßen Verfahren erhaltenen Meßwerte werden zur Regelung des Honvorganges verwertet, wodurch eine sehr hohe Bearbeitungsgenauigkeit erreicht wird.

Während der vorzugsweise kurzzeitigen Reduzierung der Honbearbeitung wird z.B. das Werkstück in mehreren Ebenen vermessen und dessen Form festgestellt. Bei Abweichungen von der Sollform werden in bekannter Weise Korrektursignale gebildet, die zu einer Veränderung des Arbeitshubes der Honmaschine führen. Der Arbeitshub wird durch vorzugsweise unabhängige Verstellung beider Umkehrgrenzpunkte vergrößert, verkleinert oder verlagert, wie es aus der DE-OS 25 59 949 bereits bekannt ist.

Ferner können in vorteilhafter Weise nach einem weiteren Merkmal der Erfindung aus den während der reduzierten Honbearbeitung gewonnenen Meßwerten durch Vergleich mit den zuletzt vor der Reduzierung ermittelten Meßwerten Korrekturwerte gebildet werden, mit denen die nachfolgenden, während der vollen Honbearbeitung ermittelten Meßwerte korrigierbar sind.

Zur Reduzierung der Honbearbeitung wird über die Zustelleinrichtung die Andrückkraft der Honsteine gegen das Werkstück so weit vermindert, daß dieses wieder seine entspannte Form einnimmt. Gleichzeitig kann vorteilhaft die Hubgeschwindigkeit herabgesetzt werden und zwar vorzugsweise auf einen Wert unter 12 m/min. Dies ermöglicht eine gute Erfassung der einzelnen Meßwerte in den beispielsweise in axialem Abstand voneinander liegenden Meßstellen am Werkstück.

Besonders vorteilhaft ist eine bevorzugte Ausführungsform der Erfindung, bei der zusätzlich die Drehzahl des Werkstückes vermindert wird. Vorzugsweise wird die Drehzahl auf einen Wert verringert, bei dem der durch die Hubgeschwindigkeit und die Drehzahl bestimmte Winkel der Bearbeitungsspuren, der sogenannte Kreuzschliffwinkel unverändert bleibt.

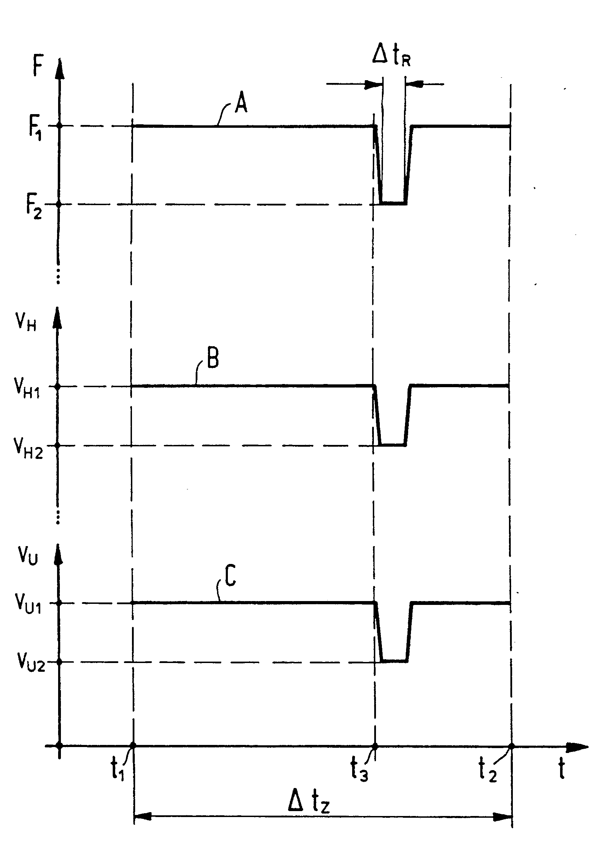

Weitere Merkmale der Erfindung ergeben sich aus den weiteren Ansprüchen, der nachfolgenden Beschreibung und der Zeichnung.

Die Zeichnung zeigt ein Diagramm, in dem schematisch der erfindungswesentliche Verlauf der Zustellkraft F, der Hubgeschwindigkeit $v_H$ und der Umfangsgeschwindigkeit $V_U$ des Honwerkzeuges über die Honzeit t während der Honbearbeitung eines Werkstückes dargestellt sind.

Der Zeitpunkt $t_1$ kennzeichnet z.B. den Beginn und $t_2$ das Ende der Honbearbeitung eines Werkstückes. D.h. die mit $\Delta t_z$ bezeichnete Zeitspanne ist die Zerspanzeit in der das Aufmaß am Werkstück durch Honen abgetragen wird.

Beim Stand der Technik erfolgt die Zerspanung mit im wesentlichen konstanter Hub- und Umfangsgeschwindigkeit. Hub- und Drehzahl werden dabei für eine bestimmte Werkstückserie voreingestellt, wobei das Verhältnis von Hub und überlagerter Drehzahl so gewählt ist, daß sich ein Überschneidungswinkel der Bearbeitungsspuren von etwa 45° bis 70° ergibt.

Die Zustellkraft mit der die Honsteine dabei gegen die Werkstückoberfläche gedrückt werden, kann beim Stand der Technik ebenfalls konstant sein. Sie kann auch dem Arbeitsfortschritt angepaßt sein, mit dem Ziel, ständig eine opitmale Zerspanung zu erreichen, wobei auch bekannt ist mit pulsierender Andrückkraft zu arbeiten.

Für die Beschreibung und Darstellung der vorliegenden Erfindung wird der Einfachheit halber von einer zunächst konstanten Andrückkraft der Honsteine ausgegangen, wenngleich selbstverständlich die Erfindung darauf nicht beschränkt ist.

Die Honbearbeitung findet also zunächst, wie im Diagramm dargestellt, mit konstanter Zustellkraft $F_1$ (Kurve A), konstanter Hubgeschwindigkeit $v_{H1}$ (Kurve B) und Umfangsgeschwindigkeit $v_{U1}$ (Kurve C) statt. Gleichzeitig kann mit Beginn der Zerspanung in bekannter Weise über ein mit einem Sensor ausgerüstetes Honwerkzeug das Werkstück laufend oder periodisch gemessen werden. Bei der für eine ordentliche Zerspanung nötigen Schnittgeschwindigkeit und Andrückkraft der Honsteine sind jedoch die so erhaltenen Meßwerte nicht sehr genau. Dies rührt zum einen daher, daß die Zeit zum Erfassen eines Meßwertes in einer bestimmten Ebene des Werkstückes, infolge des mit Schnittgeschwindigkeit über die Werkstückoberfläche bewegten Sensors, nicht ausreicht. Zum anderen deformiert sich das Werkstück unter der Einwirkung der insbesondere radial wirkenden Andrückkraft der Honsteine elastisch. Eine verlässliche Aussage über die Form und das genaue Maß des Werkstückes ist daher nicht möglich.

Die Erfindung schlägt deshalb vor, nach einer vorbestimmten Honzeit innerhalb der Zerspanzeit, z.B. im Zeitpunkt $t_3$ oder bei Erreichen eines vorbestimmten Zwischenmaßes vor Erreichen des Fertigmaßes des Werkstückes die Zustellkraft $F_1$ schlagartig auf ein niedrigeres Niveau ($F_2$) abzusenken und dann eine Messung durchzuführen. Die im Diagramm mit $\Delta t_R$ bezeichnete Zeitspanne in der die Zustellkraft reduziert ist, ist so gewählt, daß mindestens ein Meßvorgang mit Erfassung der augenblicklichen Werkstückform und/oder des Werkstückmaßes in an sich bekannter Weise durchführbar ist.

Die Reduzierung der Zustellkraft ist vorzugsweise so groß gewählt, daß die Deformation des Werkstückes aufgehoben ist, jedoch die Honsteine gerade noch unter leichtem Anlagedruck an der Werkstückoberfläche anliegen.

Gleichzeitig mit der Absenkung der Zustellkraft wird bei einer vorteilhaften Ausführungsform der Erfindung die Hubgeschwindigkeit $v_{H1}$ und die Umfangsgeschwindigkeit $v_{U1}$ zum Zeitpunkt $t_3$ herabgesetzt und während der Zeitspanne $\Delta t_R$ auf einem niedrigeren Niveau ($v_{H2}$, $v_{U2}$) gehalten, wie die Kurven B und C im Diagramm zeigen. Vorzugsweise wird die Hubgeschwindigkeit $v_{H1}$ auf einen Wert unter 12 m/min abgesenkt.

Besonders vorteilhaft ist eine Ausführungsform der Erfindung bei der die Reduzierung der Hubgeschwindigkeit $v_{H1}$ und der Umfangsgeschwindigkeit $v_{U1}$ so erfolgt, daß das Verhältnis beider Geschwindigkeiten zueinander unverändert bleibt und damit keine Änderung des Überschneidungswinkels der Bearbeitungsspuren auftritt. Selbstverständlich kann es im Einzelfall auch vorteilhaft sein, nur die Hubgeschwindigkeit und/oder die Umfangsgeschwindigkeit zu reduzieren, nämlich dann wenn eine Deformation des Werkstückes durch die Zustellkraft nicht auftritt, z.B. bei besonders stabiler und gleichförmiger Ausbildung des Werkstückes.

Die Reduzierung der Honbearbeitung für die Dauer $\Delta t_R$ zur Durchführung eines Meßvorganges kann, wie im Diagramm dargestellt, innerhalb der Zerspanzeit $\Delta t_Z$ einmal vorgenommen werden, vorzugsweise wenn etwa 2/3 des Aufmaßes des Werkstückes zerspant ist. Die während der Zeitspanne $\Delta t_R$ ermittelten sehr genauen Meßwerte werden vom Meßgerät an ein mit der Maschinensteuerung verbundenes Regelgerät gegeben, das meist in Form eines Rechners arbeitet. Der Rechner verarbeitet die Meßwerte in an sich bekannter Weise, wobei insbesondere Formabweichungen des gemessenen Werkstückes von einer vorgegebenen Sollform festgestellt werden und zu einer Veränderung des Arbeitshubes der Honmaschine führen, wodurch im weiteren Verlauf der Bearbeitung der Formfehler am Werkstück beseitigt wird.

Da die Vorbearbeitung von Werkstücken meist auf automatischen Maschinen erfolgt ist anzunehmen, daß Formfehler aus der Vorbearbeitung bei aufeinanderfolgenden Werkstücken etwa gleich ausfallen, wodurch auch beim Honwerkzeug Formfehler durch Abnützung in gleicher Tendenz hervorgerufen werden. Deshalb wird vorzugsweise die Korrektur des Arbeitshubes zunächst beibehalten. D.h., es findet eine Speicherung der dem Fehler zugehörigen Korrektur statt, die so lange gilt, bis bei einem der nachfolgenden Werkstücke durch die Meßeinrichtung erneut ein Formfehler festgestellt wird.

Es ist jedoch auch möglich, nach jedem Werkstück die vorgenommene Korrektur zurückzunehmen, d.h. der Arbeitshub nimmt nach jedem Werkstück wieder eine vorbestimmte Grundstellung ein. Diese Ausführung ist vorteilhaft, wenn die der Honmaschine zugeführten Werkstücke nicht gleich ausfallen.

In diesem Fall kann es auch vorteilhaft sein, die Honbearbeitung schon zu einem früheren Zeitpunkt innerhalb der Zerspanzeit zu reduzieren um rechtzeitig durch eine genaue Messung den Arbeitshub auf den zu korrigierenden Formfehler aus der Vorarbeit einzustellen.

Es ist ferner auch möglich, die Honbearbeitung innerhalb der Zerspanzeit eines Werkstückes mehrmals erfindungsgemäß zu reduzieren, um eine genaue Messung des Werkstückes vorzunehmen.

Bei einer besonders vorteilhaften Ausführungsform werden die unmittelbar zuletzt vor der Reduzierung der Honbearbeitung im Zeitpunkt $t_3$ ermittelten Meßwerte gespeichert und im Rechner mit den während der reduzierten Honbearbeitung ermittelten sehr genauen Meßwerten verglichen. Die Differenzwerte stellen ein Maß für den Meßfehler dar, mit dem die während der vollen Honbearbeitung ermittelten Meßwerte in der jeweiligen Meßebene behaftet sind. Der Rechner addiert die Differenzwerte zu den laufend während der vollen Honbearbeitung gewonnenen Meßwerten und bildet korrigierte Meßwerte.

Damit ist es möglich, während der gesamten Honbearbeitung laufend die augenblickliche Form des Werkstückes sehr genau festzustellen und beim Auftreten einer Abweichung von der vorgegebenen Sollform sofort durch Veränderung des Arbeitshubes gegenzusteuern.

Ferner ist dadurch eine sehr genaue Maßkontrolle des Werkstückes möglich, welche die Einhaltung von sehr engen Fertigungstoleranzen erlaubt.

Es sei hier bemerkt, daß die Maßkontrolle vorteilhaft in an sich bekannter Weise durch einen Vergleich mit einem das Sollmaß aufweisenden Kontrollring erfolgt. Dieser Vergleich wird vorzugsweise nach jedem bearbeiteten Werkstück durchgeführt.

Es ist schließlich, nach einem weiteren Vorschlag der Erfindung auch möglich, mit dem am Honwerkzeug angebrachten Sensor eine Messung des Werkstückes vor und/oder nach der Honbearbeitung in der Honstation durchzuführen. In diesem Fall befinden sich die Honsteine in zurückgezogener Position und liegen nicht am Werkstück an.

Durch eine solche Vormessung kann z.B. in vorteilhafter Weise der Formfehler des Werkstückes aus der Vorbearbeitung festgestellt und der Honvorgang, insbesondere der Arbeitshub vor Honbeginn entsprechend eingestellt werden.

Besonders vorteilhaft ist eine Nachmessung des Werkstückes, wenn die festgestellten Meßwerte - welche die Istform/-maß des fertiggehonten Werkstückes repräsentieren - an eine maschinelle Datenverarbeitung gegeben und ausgewertet werden.

Die Auswertung kann beispielsweise in bekannter Weise die Zuordnung zu Maßgruppen, Bildschirmanzeigen und/oder Ausdruck der Form des Werkstückes, Berechnung statistischer Kenngrößen für die Qualitätskontrolle, Speicherung der Daten auf einem Datenträger für die Weiterverarbeitung der Daten außerhalb der Honmaschine u.a.m. umfassen.

## Patentansprüche

1. Honverfahren unter Verwendung einer Honmaschine mit einer Honspindel, deren Hubgrenzlagen einstellbar sind, und mit einer mindestens einen Sensor aufweisenden Meßeinrichtung für das zu honende Werkstück, wobei das Werkstück während der Honbearbeitung über den am Honwerkzeug angebrachten Sensor gemessen und über ein Regelgerät der Honvorgang beeinflußt wird, dadurch gekennzeichnet, daß während mindestens einer Messung die Honbearbeitung zumindest reduziert wird.

2. Verfahren nach Anspruch 1, dadurch gekennzeichnet, daß während mindestens einer Messung die Zustellkraft (F) des Honwerkzeuges vermindert, vorzugsweise soweit vermindert wird, daß die Deformation des Werkstückes aufgehoben ist.

3. Verfahren nach Anspruch 1 oder 2, dadurch gekennzeichnet, daß während mindestens einer Messung die Hubgeschwindigkeit ($v_H$) und/oder die Umfangsgeschwindigkeit ($v_U$) des Honwerkzeuges vermindert werden.

4. Verfahren nach Anspruch 3, dadurch gekennzeichnet, daß während mindestens einer Messung die Hubgeschwindigkeit ($v_H$) auf einen Wert unter 12 m/min herabgesetzt wird, und vorzugsweise die Umfangsgeschwindigkeit ($v_U$) so vermindert wird, daß das Verhältnis beider Geschwindigkeiten zueinander unverändert bleibt.

5. Verfahren nach einem der Ansprüche 1 bis 4, dadurch gekennzeichnet, daß die Reduzierung der Honbearbeitung nach einer vorbestimmten Honzeit innerhalb der Zerspanzeit ($\Delta t_Z$) erfolgt, und daß vorzugsweise die Reduzierung der Honbearbeitung bei Erreichen eines vorbestimmten Zwischenmaßes vor Erreichen des Fertigmaßes, vorzugsweise wenn etwa 2/3 des Aufmaßes zerspant sind, erfolgt.

6. Verfahren nach einem der Ansprüche 1 bis 5, dadurch gekennzeichnet, daß die Honbearbeitung mindestens ein, vorzugsweise mehrmals für eine vorbestimmte Zeitspanne ($\Delta t_R$) innerhalb der Zerspanzeit ($\Delta t_Z$) reduziert wird, und daß vorzugsweise die Hub- und/oder Umgangsgeschwindigkeit ($v_{H1};v_{U1}$) während der Zeitspanne ($\Delta t_R$) auf dem niedrigen Niveau ($v_{H2};v_{U2}$) gehalten werden.

7. Verfahren nach einem der Ansprüche 1 bis 6, dadurch gekennzeichnet, daß während der reduzierten Honbearbeitung die Form und/oder das Maß des Werkstückes in an sich bekannter Weise ermittelt und zur Regelung des Honvorganges verwertet wird.

8. Verfahren nach einem der Ansprüche 1 bis 7, dadurch gekennzeichnet, daß die vor der reduzierten Honbearbeitung ermittelten Meßwerte gespeichert und mit den während der reduzierten Honbearbeitung ermittelten Meßwerten verglichen und Differenzwerte gebildet werden, die vorzugsweise zur Korrektur der während der vollen Honbearbeitung gewonnenen Meßwerte verwertet werden.

9. Verfahren nach Anspruch 8, dadurch gekennzeichnet, daß die korrigierten Meßwerte in an sich bekannter Weise zur Regelung des Honvorganges verwertet werden.

10. Verfahren nach einem der Ansprüche 1 bis 9, dadurch gekennzeichnet, daß mit dem am Honwerkzeug angebrachten Sensor eine Messung des Werkstückes in der Honstation vor und/oder nach der Honbearbeitung durchgeführt wird.

## Claims

1. Honing method using a honing machine with a honing spindle, whereof the stroke limit positions are adjustable, and with a measuring device for the work-piece to be honed, comprising at least one sensor, the work-piece being measured during the honing work by the sensor located on the honing tool and the honing operation being influenced by way of a control unit, characterised in that during at least one measurement, the honing work is at least reduced.

2. Method according to Claim 1, characterised in that during at least one measurement, the infeed force (F) of the honing tool is reduced, preferably reduced so far that the deformation of the work-piece is discontinued.

3. Method according to Claim 1 or 2, characterised in that during at least one measurement, the stroke speed ($V_H$) and/or the peripheral speed ($V_U$) of the honing tool are reduced.

4. Method according to Claim 3, characterised in that during at least one measurement, the stroke speed ($V_H$) is reduced to a value below 12m/min, and preferably the peripheral speed ($V_U$) is reduced so that the ratio of both speeds with respect to each other remains unchanged.

5. Method according to one of Claims 1 to 4, characterised in that the reduction of the honing work takes place after a pre-determined honing time within the machining time ($\Delta t_Z$), and that preferably the reduction of the honing work takes place on reaching a pre-determined intermediate dimension before reaching the finished dimension, preferably when approximately 2/3 of the admeasurement are machined.

6. Method according to one of Claims 1 to 5, characterised in that the honing work is reduced at least once, preferable several times for a pre-determined time interval ($\Delta t_R$) within the machining time ($\Delta t_Z$), and that preferably the stroke and/or peripheral speed ($V_{H1}$); $V_{U1}$) are kept at the low level ($V_{H2}$;$V_{U2}$) during the machining time ($\Delta t_R$).

7. Method according to one of Claims 1 to 6, characterised in that during the reduced honing work, the shape and/or the size of the work-piece is ascertained in manner known per se and is used for regulating the honing operation.

8. Method according to one of Claims 1 to 7, characterised in that the measured values ascertained before the reduced honing work are memorised and compared with the measured values ascertained during the reduced honing work, differential values are formed, which are evaluated preferably for the correction of the measured values obtained during the full honing work.

9. Method according to Claim 8, characterised in that the corrected measured values are evaluated in manner known per se for regulating the honing operation.

10. Method according to one of Claims 1 to 9, characterised in that with the sensor located on the honing tool, a measurement of the work-piece in the honing station is carried out before and/or after the honing work.

## Revendications

1. Procédé de pierrage avec mise en oeuvre d'une machine à pierrer munie d'une broche de pierrage dont les positions de fin de course sont réglables, et d'un dispositif de mesure pour la pièce à pierrer comprenant au moins un détecteur, la pièce à usiner étant mesurée pendant le pierrage par l'intermédiaire du détecteur monté sur l'outil de pierrage et l'opération de pierrage étant influencée par l'intermédiaire d'un appareil de réglage, **caractérisé en ce** que le pierrage est réduit pendant au moins une mesure.

2. Procédé selon la revendication 1, caractérisé en ce que pendant au moins une mesure, la force d'avance (F) de l'outil de pierrage est diminuée, de préférence de telle façon que la déformation de la pièce à usiner est supprimée.

3. Procédé selon l'une des revendications 1 ou 2, caractérisé en ce que pendant au moins une mesure, la vitesse de levage ($V_H$) et/ou la vitesse circonférentielle ($V_U$) de l'outil de pierrage sont réduites.

4. Procédé selon la revendication 3, caractérisé en ce que pendant au moins une mesure, la vitesse de levage ($V_H$) est abaissée à une valeur inférieure à 12 m/min, et que la vitesse circonférentielle ($V_U$) est réduite de préférence de telle façon que le rapport entre les deux vitesses reste inchangé.

5. Procédé selon l'une des revendications 1 à 4, caractérisé en ce que la réduction du pierrage intervient après un temps de pierrage prédéterminé à l'intérieur du temps d'usinage ($\Delta t_Z$), et que la réduction du pierrage intervient dès l'atteinte d'une cote intermédiaire prédéterminée, avant l'atteinte de la cote définitive, de préférence lorsque les 2/3 environ de la surépaisseur sont enlevés.

6. Procédé selon l'une des revendications 1 à 5, caractérisé en ce que le pierrage est réduit au moins une fois, de préférence plusieurs fois, pour un intervalle de temps prédéterminé ($\Delta t_R$) à l'intérieur du temps d'usinage ($\Delta t_Z$), et que la vitesse de levage et/ou la vitesse circonférentielle ($V_{H1}$ ; $V_{U1}$) sont maintenues à un niveau bas ($V_{H2}$; $V_{U2}$) pendant l'intervalle de temps ($\Delta t_R$).

7. Procédé selon l'une des revendications 1 à 6, caractérisé en ce que pendant le pierrage à régime réduit, la forme et/ou la cote de la pièce à usiner est déterminée de la manière bien connue en soi et utilisée pour le réglage de l'opération de pierrage.

8. Procédé selon l'une des revendications 1 à 7, caractérisé en ce que les valeurs de mesure déterminées avant le pierrage à régime réduit sont mémorisées et comparées avec les valeurs de mesure déterminées pendant le pierrage à régime réduit, et que sont formées des valeurs différentielles qui sont utilisées de préférence pour la correction des valeurs de mesure obtenues pendant le pierrage à plein régime.

9. Procédé selon la revendication 8, caractérisé en ce que les valeurs de mesure corrigées sont utilisées de la manière bien connue en soi pour le réglage de l'opération de pierrage.

10. Procédé selon l'une des revendications 1 à 9, caractérisé en ce que, au moyen du détecteur monté sur l'outil de pierrage, une mesure de la pièce à usiner est effectuée dans la station de pierrage avant et/ou après le pierrage.